# EUROPÄISCHE PATENTANMELDUNG

(11) **EP 1 748 346 A1**
(43) Veröffentlichungstag der Anmeldung: **31.01.2007**
(21) Anmeldenummer: 05016445.8
(22) Anmeldetag: 28.07.2005
(51) Int. Cl.: G06F 1/18, H05K 5/00

(54) **Elektronisches Gerät**

(71) Anmelder: Wachendorff Elektronik GmbH & Co. KG, 65366 Geisenheim (DE)
(72) Erfinder: Wachendorff, Peter, Dr., 65391 Lorch (DE); Ziesen, Dirk, 65391 Lorch (DE)
(74) Vertreter: Grünecker, Kinkeldey, Stockmair & Schwanhäusser Anwaltssozietät

(57) **Zusammenfassung**

Die vorliegende Erfindung betrifft ein elektronisches Gerät mit einem Gehäuse (2, 4) und in dem Gehäuse (2, 4) aufgenommenen elektronischen Bauteilen (6, 8, 10, 12, 14, 16).

Zur leichteren Demontage des Gerätes im Hinblick auf eine leichtere Trennung und stoffliche Verwertung der Bauteile wird mit der vorliegenden Erfindung eine von dem Gehäuse (2, 4) gehaltene Stützstruktur (20, 22) aus einem elastischen Material mit mehreren Aufnahmen (24, 26, 56, 58) zur Aufnahme einzelner Bauteile (6, 8, 10, 12, 14, 16, 18, 30) des Gerätes vorgeschlagen.

## Beschreibung

Die vorliegende Erfindung betrifft ein elektronisches Gerät mit einem Gehäuse und in dem Gehäuse aufgenommenen elektronischen Bauteilen.

Derartige elektronische Geräte sind als selbständig funktionsfähige Geräte, beispielsweise in Form von Messgeräten, wie Temperaturfühler, Spannungsmesser, als EKGs oder Laptops sowie als in eine größere bauliche Einheit eingebaute Geräte, wie beispielsweise Steuer- bzw. Regelgeräte in einem Kraftfahrzeug, einem Flugzeug oder einer Werkzeugmaschine bekannt. Als elektronisches Gerät im Sinne der vorliegenden Erfindung wird jedes Gerät angesehen, welches wenigstens ein elektronisches Bauteil enthält. Hierzu zählen insbesondere elektronische Anzeigevorrichtungen, wie beispielsweise Displays, Leuchtdioden, ferner elektronische Steuerungs- bzw. Regelungsvorrichtungen, insbesondere umfassend Halbleiterbauteile sowie beispielsweise auch elektronische Antriebseinrichtungen, beispielsweise in Form von Piezoantrieben.

Es besteht heute das Erfordemis, veraltete bzw. funktionsunfähige elektronische Geräte der eingangs genannten Art weitestgehend zu demontieren und die einzelnen Elemente des elektronischen Gerätes der wertstoffmäßigen Wiederverwertung zuzuführen. Hierzu ist es notwendig, die einzelnen Bauteile des Gerätes aus dem Gehäuse zu entnehmen und zu trennen. So müssen beispielsweise Kupfer enthaltende Teile, wie beispielsweise Kabel von den Halbleiterbauteilen und Platinen getrennt werden. Gesondert verwertet werden muss beispielsweise ein in dem Gehäuse aufgenommener Akkumulator. Als weitere separat zu trennende Bauteile sind Kunststoffbauteile zur Isolation bzw. Ausbildung von Bedienelementen an der Oberfläche des Gehäuses zu nennen, deren Material als Kunststoffrecyclat wiederverwertet werden kann.

Heutzutage werden elektronische Geräte üblicherweise dadurch zusammengebaut, dass einzelne Bauteile fest mit dem Gehäuse verbunden werden. In dieser Weise werden mehrere funktionell miteinander zusammenwirkende Bauteile mit dem Gehäuse montiert. Teilweise wird eine zentrale Leiterplatte in das Gehäuse eingebracht, die auch elektrisch leitende Aufnahmeplätze für weitere Bauteile, beispielsweise Akkumulatoren oder Batterien haben kann. Grundsätzlich werden aber die verschiedenen Bauteile miteinander bzw. mit dem Gehäuse über Verbindungselemente verbunden. Üblich sind Rastelemente, Schrauben, Klammern sowie Nieten, wobei es sich bei den Nieten schwerpunktmäßig um Kunststoffnieten handelt, welche zur Ausbildung einer formschlüssigen Verbindung angeschmolzen und zu einem Nietkopf verbreitert werden. Bei einer wertstoffmäßigen Trennung der einzelnen Bauteile des elektronischen Gerätes müssen diese Verbindungselemente im einzelnen gelöst werden, um die Bauteile aus dem Gehäuse entnehmen zu können. Die Demontage des elektronischen Gerätes erweist sich danach heutzutage als aufwendig, was die stoffliche Verwertung der einzelnen Bauteile erschwert.

Der vorliegenden Erfindung liegt das Problem zugrunde, ein elektronisches Gerät der eingangs genannten Art so weiterzubilden, dass die stoffliche Verwertung der einzelnen in dem Gehäuse aufgenommenen Bauteile vereinfacht ist.

Zur Lösung dieses Problems wird mit der vorliegenden Erfindung ein elektronisches Gerät mit den Merkmalen von Anspruch 1 vorgeschlagen. Dieses ist gegenüber dem gattungsbildenden Stand der Technik durch eine Stützstruktur unterschieden, die von dem Gehäuse gehalten ist und aus einem elastischen Material besteht. Die Stützstruktur weist mehrere Aufnahmen zur Aufnahme jeweils einzelner Bauteile des Gerätes auf. Die Aufnahmen der Stützstruktur sind derart ausgebildet, dass einzelne Bauteile oder zu einer Gruppe zusammengefasste Bauteile lagegesichert in der jeweiligen Aufnahme gehalten sind. Dementsprechend weist die Aufnahme den Abmessungen des einzelnen Bauteils bzw. der Gruppe von Bauteilen entsprechende Abmessungen auf. Es bedarf keiner weiteren Fixierung der Bauteile durch Verbindungselemente der eingangs genannten Art. Aufgrund der elastischen Eigenschaften des die Stützstruktur bildenden Materials sind die Bauteile stoßgedämpft in dem Gehäuse gelagert. Ferner ermöglicht das elastische Material eine gewisse elastische Verformung der Stützstruktur beim Einbringen der einzelnen Bauteile bzw. der Gruppen von Bauteilen in die Aufnahmen und erleichtert somit sowohl die Montage des elektrischen Gerätes als auch die spätere Demontage zur stofflichen Verwertung der Bauteile. Aufgrund des elastischen Materials können ferner in der Stützstruktur Filmscharniere ausgebildet werden, die ein Verschwenken von Bereichen der Stützstruktur erlauben, wodurch Öffnungen geschaffen werden können, die ein leichtes Einbringen und Entnehmen einzelner Bauteile in die zugeordnete Aufnahme der elastischen Stützstruktur erlauben.

Die Stützstruktur ist vorzugsweise zwischen miteinander verbundenen Gehäuseteilen geklemmt und durch diese Klemmung allein werden die wesentlichen Bauteile des elektronischen Gerätes, vorzugsweise sämtliche Bauteile in dem Gehäuse lagegesichert. Auf diese Weise lagegesichert werden insbesondere solche Bauteile, die bei einer stofflichen Verwertung des elektronischen Gerätes voneinander getrennt werden müssen. Andere Bauteile, die zwar unterschiedliche technische Funktionen in dem elektronischen Gerät ausüben, gleichwohl der gleichen stofflichen Verwertung zugeführt werden, können fest miteinander verbunden in dem Gehäuse aufgenommen sein. In diesem Fall kann es ausreichen, lediglich eines dieser zu einer Einheit verbundenen Bauteile in einer Aufnahme lagegesichert aufzunehmen, welches die anderen Bauteile des Verbundes dadurch in vorbestimmter Weise in dem Gehäuse hält. Vorzugsweise sollten aber insbesondere sämtliche elektronischen Bauteile in einer Weise in dem Gehäuse aufgenommen sein, dass diese im wesentlichen nur durch die Klemmkraft, die auf die elastische Stützstruktur wirkt, in der elastischen Stützstruktur lagegesichert gehalten sind. Mit anderen Worten, fehlen vorzugsweise Verbindungselemente der vorstehend genannten Art, durch welche die elektronischen Bauteile direkt mit dem Gehäuse verbunden sind. Die Halterung der elektronischen Bauteile, vorzugsweise sämtlicher Bauteile des elektronischen Gerätes erfolgt insbesondere durch formschlüssige Aufnahme in der bzw. den Aufnahmen. Aufgrund der elastischen Eigenschaften der Stützstruktur können Bauteile aber auch ohne Formschluss in der elastischen Stützstruktur gehalten werden. Durch Übermaß-Paarungen und das elastische Verformen der Stützstruktur werden hierbei insbesondere Anpresskräfte erzeugt, die das entsprechende Bauteil durch Reibschluss bzw. Kraftschluss halten können. Die Befestigung der Bauteile mittels Reib- bzw. Kraftschluss ist dabei ebenfalls eine denkbare Alternative zu dem vorerwähnten Formschluss.

Gemäß einer bevorzugten Weiterbildung sind bei dem elektronischen Gerät lediglich die Gehäuseteile über Verbindungselemente der eingangs genannten Art miteinander verbunden. Die Gehäuseteile können also verrastet, vernietet, verschraubt sein oder mit einer Klammer form- und/oder kraftschlüssig zu einer Einheit verbunden sein.

Gemäß einer weiteren bevorzugten Ausgestaltung der vorliegenden Erfindung bildet die elastische Stützstruktur an der Oberfläche des Gehäuses sichtbare Funktions- und/oder Dekorelemente aus. Die Stützstruktur ist beispielsweise abschnittsweise aus dem Gehäuse herausgeführt. Als Funktionselemente können beispielsweise Tasten oder Dichtungen zur Abdichtung von gegenüberliegenden Gehäuseteilen vorgesehen sein. Als Funktionselemente sind ferner Lichtleitelemente zu verstehen, die über einer in dem Gehäuse aufgenommen Lichtquelle angeordnet sind und das von der Lichtquelle erzeugte Licht von der Außenseite des Gehäuses her sichtbar machen. Hierzu kann die elastische Stützstruktur abschnittsweise oder vollständig aus einem transparenten Material, insbesondere einem weichelastischen Kunststoff, speziell einem thermoplastischen Elastomer gebildet sein. Die elastische Stützstruktur kann ganz oder teilweise transparent und eingefärbt sein. Ebenso können verschiedene Farben innerhalb der Stützstruktur verwirklicht sein. Eine individuelle Aufnahme der Bauteile innerhalb der Stützstruktur kann ferner dadurch erreicht werden, dass diese abschnittsweise mit unterschiedlichen Härten ausgebildet ist oder stellenweise eine Oberflächenbehandlung oder ―modifizierung aufweist, wie beispielsweise ein Coating oder eine Lackierung. Unterschiedliche Eigenschaften der elastischen Stützstruktur können insbesondere durch verschiedene punktuelle Beimischungen der Kunststoffmassen oder durch Herstellung der elastischen Stützstruktur als Zwei- oder Mehrkomponentenbauteil verwirklicht werden. Denkbar ist auch die Verwendung von punktuellen Beimischungen bei der Herstellung der elastischen Stützstruktur.

Als weiteres Funktionselement im Bereich der Gehäusewand kann die elastische Stützstruktur ferner eine Dichtung ausbilden. Hierzu kann sich die elastische Stützstruktur bis in eine an dem Gehäuse aufgenommene Öffnung erstrecken und diese entweder durch Anlage an der Innenwandung der Gehäuseöffnung oder durch Anliegen an einer die Gehäuseöffnung umgebenden Ringfläche, vorzugsweise an der Gehäuseinnenwand abdichten. Ferner kann die Dichtung zwischen einer Abdeckung des Gehäuses und einer Gehäusewand vorgesehen sein, um die Abdeckung dichtend in dem Gehäuse aufzunehmen. Als Abdeckung wird beispielsweise eine transparente Scheibe angesehen, durch welche ein in dem Gehäuse aufgenommenes Display sichtbar ist. Als Scheibe in diesem Sinne wird jedes transparente Element unabhängig von seiner stofflichen Beschaffenheit und Geometrie verstanden. Eine Scheibe kann auch ein dreidimensionales Gebilde sein. Bevorzugt wird eine Scheibe indes durch eine ebene transparente Glasplatte oder eine entsprechende Platte aus Kunststoff gebildet.

Als Funktionselemente sind auch Abschnitte der elastischen Stützstruktur zu verstehen, die zur Ausbildung von Bereichen mit besonderen haptischen Eigenschaften aus dem Gehäuse herausgeführt sind. Dort wird die Grifffläche zumindest auch, wenn nicht sogar wesentlich oder allein durch das Material der Stützstruktur bestimmt. Es handelt sich hierbei indes bevorzugt lediglich um eine Füllung von an dem Gehäuse ausgebildeten Ausnehmungen. Das Gehäuse, welches vorzugsweise durch Hartschalen aus Metall oder Kunststoff gebildet ist, sorgt für die strukturelle Integrität des elektronischen Gerätes. Vorzugsweise werden solche haptischen Funktionselemente in Form von aus dem Gehäuse herausgeführten Noppen oder Stegen verwirklicht. Ebenso kann die elastische Stützstruktur zur Ausbildung eines Dekorelementes durch die Gehäuseöffnung hindurchgeführt sein. Der durch die Gehäuseöffnung hindurchgeführte Teil der Stützstruktur kann sich beispielsweise an der Außenseite des Gehäuses als Noppe, Logo oder Buchstabe zeigen und hebt sich vorzugsweise durch die andere stoffliche Beschaffenheit, aufgrund der abweichenden Oberfläche und/oder abweichender Farbgebung von dem Material des Gehäuses ab und ist somit von dem Betrachter des Gehäuses wahrnehmbar. Es ist nicht ausgeschlossen, dass ein solches Dekorelement auch als besonderes haptisches Element an der Außenfläche des Gehäuses bereitsteht, d.h. das Dekorelement dort angeordnet wird, wo der Benutzer des elektronischen Gerätes dieses üblicherweise greift bzw. umgreift.

Die Stützstruktur muss nicht als einteiliges Bauteil in dem Gehäuse vorgesehen sein. Vielmehr können einzelne Stützstrukturteile nebeneinander bzw. übereinander in dem Gehäuse geschichtet sein. Die Klemmkraft des Gehäuses wird über die verschiedenen Stützstrukturteile zwischen gegenüberliegenden Gehäuseseiten übertragen. Die Stützstrukturteile können beispielsweise durch Formschluss anlagegenau zueinander positioniert sein. So können die aneinander anliegenden Flächen der Stützstrukturteile in einer dreidimensionalen Ausgestaltung ineinander greifen. Hierzu können an den aneinander liegenden Seiten der Stützstrukturteile Noppen oder korrespondierende Absätze vorgesehen sein.

Bevorzugte Weiterbildungen des elektronischen Gerätes sind in den Unteransprüchen angegeben. Die Stützstruktur ist auch für sich erfindungswesentlich, d.h. stellt eine selbständige, von dem elektronischen Gerät und dem Gehäuse losgelöste Erfindung dar. Die besonderen Wirkungen der Stützstruktur zeigen sich indes erst üblicherweise beim Zusammenwirken mit dem Gehäuse.

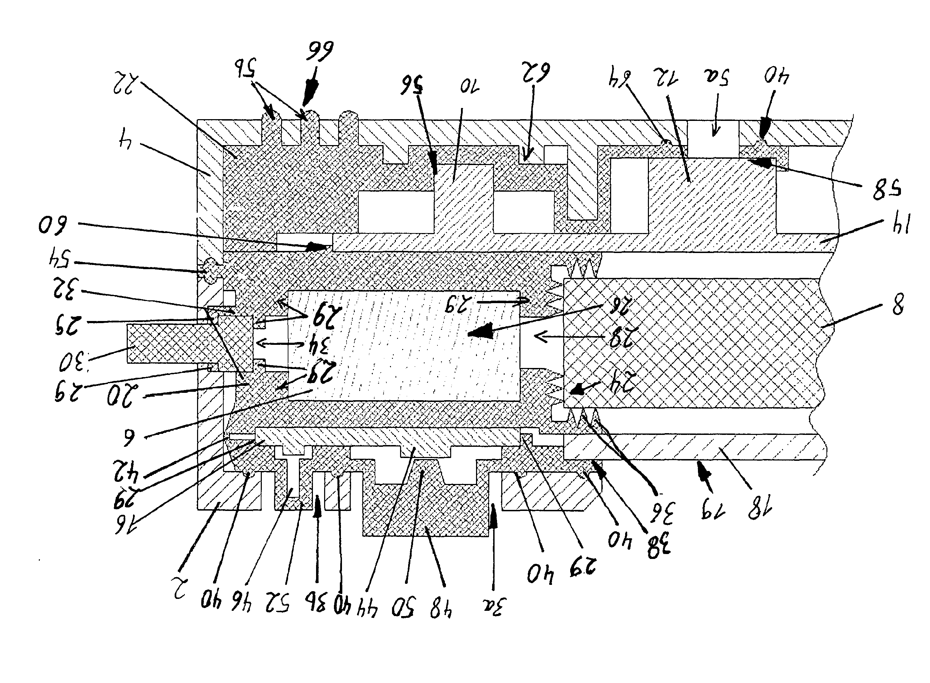

Die vorliegende Erfindung wird nachfolgend anhand eines Ausführungsbeispiels in Verbindung mit der Zeichnung näher erläutert. Diese zeigt eine Längsschnittansicht durch ein Ausführungsbeispiel eines elektronischen Gerätes.

In der Zeichnung bezeichnen die Bezugsziffern 2 und 4 Gehäuseteile in Form von Gehäusehalbschalen, die über nicht dargestellte Verbindungselemente, beispielsweise Schrauben oder Rastelemente miteinander verbunden sind. In diesen Gehäuseteilen 2, 4 ist ein Sandwichaufbau, bestehend aus mehreren Bauteilen 6, 8; 10, 12, 14; 16, 18 und einer zweiteiligen elastischen Stützstruktur 20, 22 durch Klemmung zwischen den Gehäuseteilen 2, 4 gehalten.

Die obere elastische Stützstruktur 20 weist zur Aufnahme der Bauteile 6, 8 im wesentlichen auf gleicher Höhe vorgesehene Aufnahmen 24, 26 auf. Die Aufnahme 26 für das Bauteil 6, bei dem es sich vorliegend um einen Akkumulator handelt, hat eine Einbringöffnung 28, die derart ausgebildet ist, dass der Akkumulator 6 durch diese Öffnung 28 in die Aufnahme 26 einbringbar ist. Die in Einbringrichtung des Bauteils 6 in die Aufnahme 26 vorgelagerte Aufnahme 24 ist größer als die nachgeordnete Aufnahme 26 ausgebildet. Der Akkumulator 6 kann also ohne Behinderung durch die Aufnahme 24 in die Aufnahme 26 eingebracht werden. Die Aufnahme 26 hat eine die obere und untere Kontur des Akkumulators 6 bis über seine Kanten umgreifende, durch Vorsprünge 29 dieser Kontur umgreifende Ausgestaltung, so dass der Akkumulator 6 formschlüssig in sämtlichen drei orthogonalen Bewegungsrichtungen gehalten ist. Die Zeichnung erstreckt sich in der Ebene der zwei Bewegungsrichtungen. In der dritten Ebene, d.h. vor und hinter dem Akkumulator 6 liegen ebenfalls die Wandungen der Aufnahme 26 jedenfalls teilweise an den entsprechenden Gegenflächen des Akkumulators 6 an.

In Einbringrichtung hinter dem Akkumulator 6 befindet sich eine Welle 30, die durch die elastische Stützstruktur gebildete Lagerschalen 32 in dem Gehäuse gelagert und unter Zwischenlage der elastischen Stützstruktur 20 gegenüber dem Gehäuse abgestützt ist. Auch diese Welle 30 wird durch die Einbringöffnung 28 durch die Aufnahme 26 und wird schließlich durch eine weitere Einbringöffnung 34 eingebracht und montiert. Hierbei ist das elastische Stützstrukturteil 20 bereits in dem Gehäuseteil 2 angeordnet. Die Einbringöffnung 28 ist wiederum größer als die Einbringöffnung 34. Die durch die Lagerschalen gebildete Aufnahme für die Welle 30 ist kleiner als die Aufnahme 26. Die Einbringöffnungen 28, 34, befinden sich in etwa auf gleicher Höhe, so dass zur Demontage des elektronischen Bauteils lediglich die Welle 30 in axialer Richtung in das Gehäuse geschoben werden muss, um sowohl die Welle, einen eventuell nachgeordneten Motor, den Akkumulator 6 und das Bauteil 8 aus dem Strukturteil 20 auszuschieben.

Bei dem Bauteil 8 handelt es sich um ein Display und die Aufnahme 24 umgreif das Display 8 lediglich endseitig. Die Aufnahme 24 hat hierzu eine Vielzahl von spitz zulaufenden Stützvorsprüngen 36, deren Spitzen an der Außenfläche des Displays 8 anliegen. Wesentlich bei der Verwirklichung solcher spitz zulaufender Stützvorsprünge ist die Eigenschaft der vorderen, an dem Bauteil, hier dem Display 8, anliegenden freien Enden in Längsrichtung der Stützvorsprünge elastisch zu federn und/oder sich zur elastischen Lagerung des entsprechenden Bauteils um ihre Längsachse biegen zu können. Vorzugsweise werden diese Eigenschaften durch kontinuierlich spitz zulaufende Stützvorsprünge verwirklicht, wie beispielsweise Kegel oder Pyramiden. Alternativ ist es auch denkbar, die Querschnittsfläche zum freien Ende der Stützvorsprünge hin gestuft zu verjüngen und die Stützvorsprünge als Zylinder mit rechteckiger, quadratischer oder kreisrunder Querschnittsfläche auszubilden. Denkbar sind auch gebogene bzw. biegsame oder komprimierbare Lamellen. Als geeignet haben sich auch Ausgestaltungen erwiesen, die linienförmig an den zu stützenden Bauteilen anliegen. Die Stützvorsprünge 36 sind so ausgebildet, dass sie in höherem Maße beweglich, insbesondere beweglicher als die an dem Akkumulator 6 anliegenden Seitenflächen der Aufnahme 26 sind. Dementsprechend wird durch die Stützvorsprünge 36 eine stoßgedämpfte Abstützung des Displays 8 geschaffen. Die Stützvorsprünge 36 sind an der Innenumfangs- und Stirnfläche, d.h. dem Boden der Aufnahme 24 ausgeformt.

An der dem Display 8 abgewandten Oberseite bildet die Stützstruktur 20 eine ebene Anlagefläche für eine transparente Scheibe 18 aus, die eine große Gehäuseöffnung 19 abdeckt. Auf der gegenüberliegenden Seite der Scheibe, d.h. zwischen der Scheibe und dem Gehäuseteil 2 befindet sich ebenfalls ein Teil der elastischen Stützstruktur 20, die eine Dichtung 38 ausformt, welche dichtend einerseits an der Scheibe 18 und andererseits an dem Gehäuseteil 2 anliegt. Zur Abdichtung gegenüber dem Gehäuseteil 2 bildet die elastische Stützstruktur 20 dort zusammen mit an der Gehäuseinnenwand ausgesparten Nuten eine Labyrinthdichtung aus, d.h. die Nut an der Gehäuseinnenwand wird durch das elastische Material der Stützstruktur ausgefüllt. Die einander gegenüberliegenden Enden des Stützstrukturteils 20 bilden danach eine Aufnahme für das Display 8.

Die Dichtung 38 ist Teil eines Stützstrukturabschnitts 20a, welcher über ein Filmscharnier einteilig und verschwenkbar gegenüber einem anderen Stützstrukturabschnitt 20b der elastischen Stützstruktur 20 ausgeformt ist. Der Stützstrukturabschnitt 20a erstreckt sich im wesentlichen parallel zu der Oberseite des Stützstrukturabschnitts 20b, der eine Platine 16 trägt, auf der ein Schaltelement 44 und ein LED 46 angeordnet ist. Zwischen den Stützstrukturabschnitten 20a, 20b ist somit eine Aufnahme für die Platine 16 gebildet. Die beiden Bauteile 44, 46 befinden sich auf der dem Stützstrukturabschnitt 20b abgewandten Oberseite der Platine 16. Oberhalb des Schaltelementes 40 bildet das elastische Stützstrukturteil 20 einen Taster 48 aus. Hierzu ist das elastische Stützstrukturteil durch eine Gehäuseöffnung 3a hindurchgeführt und zu einem die Gehäuseaußenseite überragenden Plateau ausgeformt. Das Plateau hat eine verdickte Basis, welche über relativ dünne Filmscharniere in das Gehäuseinnere hereingeführt und mit dem Stützstrukturteil 20 verbunden ist. Aufgrund dieser Ausgestaltung kann der Taster 48 in Richtung auf das Schaltelement 44 gedrückt werden und stellt sich aufgrund der elastischen Rückstellkraft des Stützstrukturteils 20 selbsttätig in seine in der Zeichnung gezeigte Ausgangslage zurück. Der Taster 48 hat einen mit dem Schaltelement 44 zusammenwirkenden Kontaktbereich 50, dessen Auftreffen auf das Schaltelement 44 zu Abgabe eines Schaltsignals führt.

Die LED 46 wird von einem durch das Stützstrukturteil 20 ausgebildeten Aufnahmedom 52 umgeben, der in eine weitere Gehäuseöffnung 3b hineinragt und flächenbündig mit der Oberfläche des Gehäuseteils 2 endet. Der Aufnahmedom 52 ist mit Abstand zu der Innenumfangsfläche der Gehäuseöffnung 3b vorgesehen. Die Abdichtung wird über einen Dichtwulst 40 verwirklicht, der mit einer an der Gehäuseinnenwand ausgesparten Nut zusammenwirkt. Vorzugsweise sind der Wulst und die Nut als Pressteile ausgebildet, so dass das elastische Material des elastischen Bauteils gegen die Wandung der Nut gepresst wird. Alternativ kann gehäuseseitig ein Vorsprung vorgesehen sein, der unter Presspassung in einer an der elastischen Stützstruktur ausgesparten Aufnahme dichtend anliegt.

Aufgrund des Filmscharniers 42 kann zunächst die Platine 16 sowie die Scheibe 18 bei hoch geklappten Stützstrukturabschnitt 20a auf den Stützstrukturabschnitt 20b aufgelegt werden. Danach wird der Stützstrukturabschnitt 20a verschwenkt und die Scheibe 18 sowie die Platine 16 sind durch entsprechende Vorsprünge 29, die an den Stützstrukturabschnitten 20a, 20b ausgebildet sind, lagegenau in der Aufnahme des Stützstrukturteils 20 positioniert. Danach kann das Stützstrukturteil 20 in das Gehäuseteil 2 eingebracht werden.

In ihrem unteren Bereich hat das Stützstrukturteil 20 einen die Innenwand des Gehäuseteils 2 nach außen überragenden Abschnitt, der eine weitere Dichtung 54 ausformt. Diese weitere Dichtung 54 dichtet die miteinander verbundenen Gehäuseteile 2, 4 gegeneinander ab. Auch hier ist eine Dichtung, welche die Stützstruktur 20 gegenüber dem Gehäuse 2 abdichtet, durch eine Pressverbindung zwischen dem Stützstrukturteil 20 und den Gehäuseteilen 2 bzw. 4 verwirklicht.

Das untere Stützstrukturteil 22 liegt im Bereich seines äußeren Randes bündig an dem oberen Stützstrukturteil 20 an und weist eine Aufnahme 56 für einen Kondensator 10 und eine Aufnahme 58 für einen Lautsprecher 12 auf. Der Kondensator 10 und der Lautsprecher 12 werden von einer Platine 14 getragen, die zwischen den Stützstrukturteilen 20, 22 in einer dort geschaffenen Aufnahme geklemmt ist. Ein an dem Stützstrukturteil 20 vorgesehener Vorsprung 60 sichert die Lage der Platine 14 in Querrichtung der Zeichnung.

Die Aufnahme 56 umgibt lediglich die stirnseitige Endfläche des Kondensators 10 und positioniert diesen lagegenau innerhalb des Gehäuses 2, 4. Das Gehäuseunterteil 4 weist eine konzentrisch zu dem Kondensator 10 ausgebildete Ringfläche 62 auf, welche passgenau mit der elastischen Stützstruktur 22 zusammenwirkt und diese in Lage hält und durch welche somit mittelbar auch der Kondensator 10 lagegenau in dem Gehäuse 2, 4 gehalten ist. An der platinenahen Basis des Kondensators 10 ist die elastische Stützstruktur 22 freigeschnitten, wodurch die Möglichkeit geschaffen ist, das elektronische Bauteil konvektiv zu kühlen. Entsprechende, durch das Stützstrukturteil 22 ausgebildete Kühlungskanäle können für sämtliche wärmeabgebende Elektronikbauteile, beispielsweise elektronische Leistungsschalter vorgesehen sein. Neben einer konvektiven Kühlung durch ein durch das Stützstrukturteil 22 hindurchgeleitetes Kühlmedium kann die Kühlung auch dadurch erfolgen, dass Wärmeleitelemente, wie beispielsweise metallische Streifen, in die Stützstruktur 22 integriert sind, durch welche Abwärme einzelner Bauteile wirkungsvoller abgleitet werden kann, als dies durch die Kunststoffmasse der Stützstruktur 22 verwirklicht werden könnte. Statt einer Integration von Wärmeleitelementen können diese auch zwischen den Bauteilen und der elastischen Stützstruktur vorgesehen sein. Bei einer solchen Ausgestaltung erfolgt das Einlegen entsprechender Wärmeleitelemente bei der Montage des elektronischen Gerätes.

Für den Lautsprecher 12 ist in dem Gehäuseteil 4 eine weitere durchgehende Gehäuseöffnung 5a vorgesehen, durch welche die von dem Lautsprecher 12 erzeugten Schallwellen nach außen abgegeben werden. Umfänglich um die Gehäuseöffnung 5a ist eine Ringnut 64 ausgespart, die zusammen mit einer entsprechend ausgebildeten, die Unterseite des Stützstrukturteils 22 überragenden Ringfläche eine weitere Labyrinthdichtung 40 ausbildet. Korrespondierend zu der Gehäuseöffnung 5a ist auch an dem Stützstrukturteil 22 eine zu dem Lautsprecher 12 führende Öffnung ausgespart. Das Stützstrukturteil 22 ist zwischen dem Lautsprecher 12 und der Gehäuseinnenwand des Gehäuseteils 4 geklemmt, so dass der Lautsprecher 12 gegenüber dem Gehäuseteil 4 dichtend gehalten ist. Ein Eindringen von Verschmutzung und Feuchtigkeit in das Gehäuse und durch die Öffnung 5a ist danach nicht zu befürchten.

Schließlich weist das Gehäuseteil 4 Gehäuseöffnungen 5b auf. In diese Gehäuseöffnungen ist ein Teil der elastischen Stützstruktur 22 dichtend eingebracht. Dieser Teil der elastischen Stützstruktur 22 liegt an der Innenumfangsfläche der jeweiligen Gehäuseöffnungen 5 dichtend an. Ferner überragt dieser Teil die Außenfläche des Gehäuseteils 4 und bildet eine haptische Funktionsfläche 66 aus. Eine entsprechende Anordnung kann auch gewählt werden, um das Gehäuse weich gegenüber einem Untergrund abzustützen, beispielsweise bei einem Laptop zum Schutz einer empfindlichen Holzeroberflächen oder zur stoßdämpfenden Abstützung des elektronischen Gerätes insgesamt.

Die vorliegende Erfindung ist nicht auf das gezeigte Ausführungsbeispiel beschränkt. So ist es ohne weiteres möglich, die Stützstruktur auch einteilig vorzusehen und beispielsweise das Stützstrukturteil 20 und das Stützstrukturteil 22 einteilig über ein Filmscharnier miteinander zu verbinden. Hierdurch wird die stoffliche Trennung der Bauteile des elektronischen Gerätes weiter vereinfacht, ohne auf den Vorteil verzichten zu müssen, die Platine 14 mit den darin angebrachten Bauteilen 10, 12 auf einfache Weise in der Stützstruktur anzuordnen.

### Bezugszeichenliste

- 2: Gehäuseteil
- 3a,b: Gehäuseöffnung
- 4: Gehäuseteil
- 5a,b: Gehäuseöffnung
- 6: Akkumulator
- 8: Display
- 10: Kondensator
- 12: Lautsprecher
- 14: Platine
- 16: Platine
- 18: Scheibe
- 19: Gehäuseöffnung
- 20: Stützstrukturteil
- 22: Stützstrukturteil
- 24: Aufnahme für das Display
- 26: Aufnahme für den Akkumulator
- 28: Einbringöffnung für den Akkumulator
- 29: Vorsprung zur formschlüssigen Lagerung eines Bauteils
- 30: Welle
- 32: Lagerschalen
- 34: Einbringöffnung für die Welle
- 36: Stützvorsprünge
- 38: Dichtung
- 40: Labyrinthdichtung
- 42: Filmscharnier
- 44: Schaltelement
- 46: LED
- 48: Taster
- 50: Kontaktbereich
- 52: Aufnahmedom
- 54: Dichtung
- 56: Aufnahme für den Kondensator
- 58: Aufnahme für den Lautsprecher
- 60: Vorsprung
- 62: Ringfläche
- 64: Ringnut
- 66: haptische Funktionsfläche

## Patentansprüche

1. Elektronisches Gerät mit einem Gehäuse (2, 4) und in dem Gehäuse (2, 4) aufgenommenen elektronischen Bauteilen (6, 8, 10, 12, 14, 16),
**gekennzeichnet durch**
eine von dem Gehäuse (2, 4) gehaltene Stützstruktur (20, 22) aus einem elastischen Material mit mehreren Aufnahmen (24, 26, 56, 58) zur Aufnahme einzelner Bauteile (6, 8, 10, 12, 14, 16, 18, 30) des Gerätes.

2. Elektronisches Gerät nach Anspruch 1, **dadurch gekennzeichnet, dass** die Bauteile (6, 8, 10, 12, 14, 16, 18, 30) des elektronischen Gerätes durch die Stützstruktur in vorbestimmter Lage gehalten sind und dass die Stützstruktur (20, 22) zwischen miteinander verbundenen Gehäuseteilen (2, 4) geklemmt ist.

3. Elektronisches Gerät nach Anspruch 1 oder 2, **dadurch gekennzeichnet, dass** die Bauteile (6, 8, 10, 12, 14, 16, 18, 30) im wesentlichen durch Klemmkraft in der Stützstruktur (20, 22) gehalten sind.

4. Elektronisches Gerät nach einem der vorherigen Ansprüche, **dadurch gekennzeichnet, dass** lediglich die Gehäuseteile (2, 4) über Verbindungselemente miteinander verbunden sind.

5. Elektronisches Gerät nach einem der vorherigen Ansprüche, **dadurch gekennzeichnet, dass** die Stützstruktur (20, 22) im Bereich wenigstens einer Gehäusewand ein Funktions- und/oder Dekorelement (38, 40, 42, 48, 52, 66) ausbildet.

6. Elektronisches Gerät nach Anspruch 5, **dadurch gekennzeichnet, dass** die Stützstruktur (20, 22) zur Ausbildung wenigstens eines der Funktions- und/oder Dekorelemente (38, 40, 42, 48, 52, 66) aus dem Gehäuse (2, 4) herausgeführt ist.

7. Elektronisches Gerät nach einem der vorherigen Ansprüche, **dadurch gekennzeichnet, dass** die Stützstruktur (20, 22) durch wenigstens eine an dem Gehäuse ausgesparte Gehäuseöffnung (3a, 3b, 5a, 5b) hindurchgeführt ist.

8. Elektronisches Gerät nach Anspruch 7, **dadurch gekennzeichnet, dass** die Stützstruktur (20, 22) an der Innenwand des Gehäuses (2, 4) anliegt.

9. Elektronisches Gerät nach Anspruch 7, **dadurch gekennzeichnet, dass** der durch die Gehäuseöffnung (3a, 3b) hindurchgeführte Teil (48, 52) der Stützstruktur (20, 22) mit Abstand zu der Innenumfangsfläche der Gehäuseöffnung (3a, 3b) angeordnet ist.

10. Elektronisches Gerät nach einem der Ansprüche 7 bis 9, **dadurch gekennzeichnet, dass** der durch die Gehäuseöffnung (3a) hindurchgeführte Teil der Stützstruktur (20) die Außenseite des Gehäuses (2, 4) überragt und zu einem in der Gehäuseöffnung (3a) ausgebildeten Taster (48) geformt ist, der an seiner Unterseite einen mit einem Schaltelement (44) zusammenwirkenden Kontaktbereich (50) ausformt.

11. Elektronisches Gerät nach einem der Ansprüche 7 bis 9, **dadurch gekennzeichnet, dass** der durch die Gehäuseöffnung (3b) hindurchgeführte Teil (52) der Stützstruktur (20) ein lichterzeugendes Element (46) abdeckt.

12. Elektronisches Gerät nach Anspruch 11, **dadurch gekennzeichnet, dass** der durch die Gehäuseöffnung (3b) hindurchgeführte Teil der Stützstruktur (20) einen Aufnahmedom (52) zur Aufnahme einer LED (46) ausbildet.

13. Elektronisches Gerät nach einem der vorherigen Ansprüche, **dadurch gekennzeichnet, dass** die Stützstruktur (20, 22) an wenigstens einer Stelle innerhalb des Gehäuses (2, 4) eine mit der Gehäuseinnenwand zusammenwirkende Dichtung (38, 40, 54) ausbildet.

14. Elektronisches Gerät nach einem der vorherigen Ansprüche, **dadurch gekennzeichnet, dass** die Stützstruktur (20) wenigstens eine, eine der Gehäuseöffnungen (19) abdeckende Abdeckung (18) dichtend aufnimmt.

15. Elektronisches Gerät nach einem der vorherigen Ansprüche, **dadurch gekennzeichnet, dass** die Stützstruktur (22) wenigstens eine bis zu der Innenwand des Gehäuses (2, 4) reichende Aufnahme (58) ausbildet, dort eine an dem Gehäuse (2, 4) ausgebildete Gehäuseöffnung (5a) umgibt und dichtend zwischen dem in der Aufnahme angeordneten Bauteil (12) und der Innenwand des Gehäuses (2, 4) anliegt.

16. Elektronisches Gerät nach einem der vorherigen Ansprüche, **dadurch gekennzeichnet, dass** die Stützstruktur im Bereich der Gehäusewand eine Dichtung (38, 54) ausbildet.

17. Elektronisches Gerät nach Anspruch 16, **dadurch gekennzeichnet, dass** die Stützstruktur zwischen gegenüberliegenden Stirnseiten der miteinander verbundenen Gehäuseteile (2, 4) als Dichtung (54) ausgebildet ist.

18. Elektronisches Gerät nach Anspruch 16, **dadurch gekennzeichnet, dass** die Dichtung (38) mit der Innenwand des Gehäuses (2, 4) zusammenwirkt.

19. Elektronisches Gerät nach einem der Ansprüche 16 bis 18, **dadurch gekennzeichnet, dass** die Stützstruktur (20, 22) eine Formdichtfläche (40) ausbildet, die zusammen mit einer an der Innenseite der Gehäusewand ausgeformten Formdichtgegenfläche eine Abdichtung bewirkt.

20. Elektronisches Gerät nach einem der vorherigen Ansprüche, **dadurch gekennzeichnet, dass** die Stützstruktur (20) wenigstens eine Lagerschale (32) für eine drehbar in dem Gehäuse (2, 4) gelagerte Welle (30) ausbildet.

21. Elektronisches Gerät nach einem der vorherigen Ansprüche, **dadurch gekennzeichnet, dass** eine der Aufnahmen (26) eine Einbringöffnung (28) zum Einbringen eines Bauteils (6) aufweist, dass eine andere Aufnahme (8) in Einbringrichtung der Einbringöffnung (28) vorgelagert ist und dass das in der einen Aufnahme (26) aufzunehmende Bauteil (6) durch die andere Aufnahme (24) in die eine Aufnahme (26) einbringbar ist.

22. Elektronisches Gerät nach Anspruch 21, **dadurch gekennzeichnet, dass** die in Einbringrichtung vorgelagerte Aufnahme (24) größer als die nachgeordnete Aufnahme (26) ist.

23. Elektronisches Gerät nach einem der vorherigen Ansprüche, **dadurch gekennzeichnet, dass** die Stützstruktur (20) spitz zulaufende Stützvorsprünge (36) zur stoßgedämpften Lagerung des wenigstens einen Bauteils (8) ausbildet.

24. Elektronisches Gerät nach Anspruch 23, **dadurch gekennzeichnet, dass** die Stützvorsprünge (36) im Bereich der wenigstens einen Aufnahme (24) vorgesehen sind.

25. Elektronisches Gerät nach einem der vorherigen Ansprüche, **dadurch gekennzeichnet, dass** die Aufnahme (24, 26, 56, 58) Vorsprünge (29, 36, 60) zur Abstützung des Bauteils (6, 8, 10, 14, 18, 30) in drei orthogonalen Bewegungsrichtungen ausbildet.

26. Elektronisches Gerät nach einem der vorherigen Ansprüche, **dadurch gekennzeichnet, dass** die Stützstruktur (20) wenigstens zwei Stützstrukturabschnitte (20a, 20b) aufweist, die miteinander durch ein von der Stützstruktur ausgebildetes Filmscharnier (42) verbunden sind und dass wenigstens eine Aufnahme zwischen den Stützstrukturabschnitten (20a, 20b) vorgesehen ist.

27. Elektronisches Gerät nach einem der vorherigen Ansprüche, **dadurch gekennzeichnet, dass** die Stützstruktur (20, 22) aus mehreren Teilen (20; 22) zusammengesetzt und in das Gehäuse (2, 4) eingebaut ist.

28. Elektronisches Gerät nach Anspruch 27, **dadurch gekennzeichnet, dass** die Stützstrukturteile (20, 22) durch Klemmung zwischen den Gehäuseteilen (2, 4) gehalten sind.

29. Elektronisches Gerät nach einem der vorherigen Ansprüche, **dadurch gekennzeichnet, dass** die elastische Stützstruktur (20, 22) Kühlkanäle ausbildet, die zu Wärme erzeugenden elektronischen Bauteilen führen und mit einem Kühlmitteleinlass und einem Kühlmittelauslass kommunizieren.

30. Elektronisches Gerät nach einem der vorherigen Ansprüche, **dadurch gekennzeichnet, dass** in die elastische Stützstruktur Wärmeleitelemente aus einem gut Wärme leitenden Material eingebettet sind.

31. Elektronisches Gerät nach Anspruch 30, **dadurch gekennzeichnet, dass** die Wärmeleitelemente durch Umspritzen mit der elastischen Stützstruktur verbunden sind.
